# EUROPÄISCHE PATENTSCHRIFT

(11) **EP 1 177 238 B1**
(45) Veröffentlichungstag und Bekanntmachung des Hinweises auf die Patenterteilung: **02.07.2008**
(21) Anmeldenummer: 00925166.1
(22) Anmeldetag: 03.04.2000
(51) Int. Cl.: C08G 65/26, C08G 18/48, C08G 18/50, C08G 18/32

(54) **POLYOLGEMISCH FÜR DIE HERSTELLUNG VON POLYURETHAN-HARTSCHÄUMEN**
POLYOL MIXTURE FOR THE PREPARATION OF RIGID POLYURETHANE FOAMS
MELANGE DE POLYOLS POUR LA FABRICATION DE MOUSSES RIGIDES DE POLYURETHANE

(30) Priorität: 14.04.1999 DE 19916647
(43) Veröffentlichungstag der Anmeldung: 06.02.2002
(73) Patentinhaber: Bayer MaterialScience AG, 51368 Leverkusen (DE)
(72) Erfinder: DIETRICH, Karl-Werner, D-51519 Odenthal (DE); HEINEMANN, Torsten, D-53721 Siegburg (DE); DIETRICH, Manfred, D-51373 Leverkusen (DE)
(86) Internationale Anmeldenummer: PCT/EP2000/002964
(87) Internationale Veröffentlichungsnummer: WO 2000/063276

(56) Entgegenhaltungen:
- EP-A- 0 001 800
- US-A- 4 421 871
- US-A- 5 886 062
- CHEMICAL ABSTRACTS, vol. 109, no. 26, 26. Dezember 1988 (1988-12-26) Columbus, Ohio, US; abstract no. 232192m, XP000060683 & JP 63 137917 A (TOYODA GOSEI CO. LTD.) 9. Juni 1988 (1988-06-09)

## Beschreibung

Die vorliegende Erfindung betrifft für die Herstellung von Polyurethan-Hartschäumen geeignete Polyolgemische, die Additionsprodukte von Alkylenoxid an aromatische Di- oder Polyamine enthalten, sowie mit diesen Polyolgemischen hergestellte Hartschäume.

Hartschaumpolyetherpolyole besitzen üblicherweise eine Viskosität von 2.000 bis 15.000 mPas bei 25°C, in Ausnahmefällen findet man Grundpolyole auch mit Viskositäten von bis zu 40.000 mPas bei 25°C. Üblicherweise werden Polyole mit OH-Zahlen von 350 bis 500 eingesetzt. Bei ihrer Herstellung wird in der Regel ein Starter mit aktiven Wasserstoffatomen, z. B. ein Polyalkohol wie Sucrose oder Sorbit oder ein primäres oder sekundäres Polyamin, z. B. Ethylendiamin oder Toluylendiamin, mit einem Alkyloxid unter Mitverwendung eines basischen Katalysators umgesetzt. Speziell bei Aminen wird oft so vorgegangen, daß zunächst je ein Alkylenoxid pro NH-Gruppe an das Amin angelagert wird. Die Anlagerung von weiteren Alkylenoxid geschieht dann erst nach Zugabe von basischem Katalysator, z.B. KOH. Hierdurch wird der gesamte Prozeß kompliziert und verlangsamt. Dies ist besonders ausgeprägt bei den technisch interessanten auf aromatischen Aminen gestarteten PO-Polyethern. Derartige Polyether besitzen einen sehr günstigen Einfluß auf Wärmeleitzahlen, Festigkeit, Aushärtung und Treibmittel-(Alkan-)Löslichkeit.

Polyether auf Basis aromatischer Amine, in denen je NH-Gruppe maximal ein Alkylenoxid, vorzugsweise überwiegend Propylenoxid (PO), addiert wird, können in einem Einstufenverfahren hergestellt werden. Bislang hatten derartige Produkte trotz ihrer einfachen Zugänglichkeit und ihrer Wirtschaftlichkeit bisher nur geringe technische Bedeutung, da derartige Produkte eine zu hohe Viskosität aufweisen bzw. bei Raumtemperatur fest sind.

EP-A 826 708 offenbart Polyolgemische, die Additionsprodukte von Alkylenoxiden an primäre oder sekundäre Aminogruppen aufweisende Di- oder Polyamine sowie Rizinusöl und/oder Reaktionsprodukte der genannten Additionsprodukte mit Rizinusöl enthalten. Die Additionsprodukte weisen OH-Zahlen von mindestens 500 auf. Daneben können im Polyolgemisch auch weitere, mindestens zwei gegenüber Isocyanaten reaktive Wasserstoffatome und ein Molekulargewicht von 200 bis 12.500 g/mol aufweisende Verbindungen wie Polyetherpolyole oder Polyesterpolyole enthalten sein.

Es wurde nun gefunden, daß Additionsprodukte von Alkylenoxid an primäre und sekundäre Di- und Polyamine, wobei maximal je ein Alkylenoxidmolekül pro NH-Gruppe angelagert wird, sich hervorragend verarbeiten lassen, wenn sie vermischt werden mit anderen Polyether- oder Polyesterpolyolen, die OH-Zahlen von 250 bis 500 aufweisen. Hierbei wird das Additionsprodukt vor, bei oder nach der Herstellung mit einem niedrigviskosen Polyol vermischt. Besonders überraschend ist, daß diese kurzkettigen aminischen Polyole auch bei niedriger Konzentration bereits einen unerwartet günstigen Einfluß auf die Aushärtung und damit auf die Formverweilzeit der Schaumstoffe haben.

Gegenstand der Erfindung sind somit Polyolgemische, die a) 5 bis 60 Gew.-%, bevorzugt 10 bis 30 Gew.-% eines oder mehrerer Additionsprodukt(e) von Alkylenoxid an aromatisches Di- oder Polyamin, wobei im Additionsprodukt das molare Verhältnis von Alkylenoxid zu an Stickstoff gebundenen Wasserstoffatomen im aromatischen Di- oder Polyamin maximal 1:1 beträgt, und b) 40 bis 95 Gew.-%, bevorzugt 70 bis 90 Gew.-% Polyole mit OH-Zahlen von 250 bis 500 enthält.

Bevorzugt eingesetzte Polyole mit OH-Zahlen von 250 bis 500 sind Polyetherpolyole (insbesondere Poly(oxyalkylen)polyole) und Polyesterpolyole.

Die Herstellung der Polyetherpolyole erfolgt nach bekannten Methoden, vorzugsweise durch basenkatalysierte Polyaddition von Alkylenoxiden an polyfunktionelle, aktive Wasserstoffatome aufweisende Starterverbindungen, wie z.B. Alkohole oder Amine. Bespielhaft seien genannt: Ethylenglykol, Diethylenglykol, 1,2-Propylenglykol, 1,4-Butandiol, Hexamethylenglykol, Bisphenol A, Trimethylolpropan, Glycerin, Pentaerythrit, Sorbit, Rohrzucker, abgebaute Stärke, Wasser, Methylamin, Ethylamin, Propylamin, Butylamin, Anilin, Benzylamin, o- und p-Toluidin, α,β- Naphthylamin, Ammoniak, Ethylendiamin, Propylendiamin, 1,4-Butylendiamin, 1,2-, 1,3-, 1,4-, 1,5- und/oder 1,6-Hexamethylendiamin, o-, m-, und p-Phenylendiamin, 2,4-, 2,6-Toluylendiamin, 2,2'-, 2,4- und 4,4'-Diaminodiphenylmethan und Diethylendiamin.

Als Alkylenoxide kommen bevorzugt Ethylenoxid, Propylenoxid, Butylenoxid sowie deren Mischungen zum Einsatz. Der Aufbau der Polyetherketten durch Alkoxylierung kann nur mit einem monomeren Epoxid durchgeführt werden, aber auch statistisch oder auch blockweise mit zwei oder drei unterschiedlichen monomeren Epoxiden erfolgen.

Verfahren zur Herstellung solcher Polyetherpolyole werden in "Kunststoffhandbuch, Band 7, Polyurethane", in "Reaction Polymers" sowie z.B. in US-A 1 922 451, US-A 2 674 619, US-A 1 922 459, US-A 3 190 927 und US-A 3 346 557 beschrieben.

Methoden zur Herstellung von Polyesterpolyolen sind ebenfalls gut bekannt und z.B. beschrieben in den beiden oben genannten Literaturstellen ("Kunststoffhandbuch, Band 7, Polyurethane", "Reaction Polymers"). Die Polyesterpolyole werden i.a. durch Polykondensation von mehrfunktionellen Carbonsäuren oder deren Derivaten, wie z.B. Säurechloriden oder -anhydriden, mit mehrfunktionellen Hydroxylverbindungen hergestellt.

Als mehrfunktionelle Carbonsäuren können beispielsweise verwendet werden: Adipinsäure, Phthalsäure, Isophthalsäure, Terephthalsäure, Oxalsäure, Bernsteinsäure, Glutarsäure, Azelainsäure, Sebacinsäure. Fumarsäure oder Maleinsäure.
Als mehrfunktionelle Hydroxylverbindungen können beispielsweise verwendet werden: Ethylenglykol, Diethylenglykol, Triethylenglykol, 1,2-Propylenglykol.

Dipropylenglykol, 1,3-Butandiol, 1,4-Butandiol, 1,6-Hexandiol, 1,12-Dodecandiol, Neopentylglykol, Trimethylolpropan, Triethylolpropan oder Glycerin.

Die Herstellung der Polyesterpolyole kann weiterhin auch durch Ringöffnungspolymerisation von Lactonen (z.B. Caprolacton) mit Diolen und/oder Triolen als Starter erfolgen.

Bevorzugt enthalten die erfindungsgemäßen Polyolgemische bezogen auf die Gesamtmenge an Additionsprodukt(en) von Alkylenoxid an aromatisches Di- oder Polyamin 30 bis 70 Gew.-%, bevorzugt 40 bis 60 Gew.-% eines Polyols mit einer Viskosität kleiner 3000 mPas (25°C), bevorzugt kleiner 2000 mPas (25°C).

Derartige Polyester haben erfahrungsgemäß einen sehr günstigen Einfluß auf die Wärmeleitzahl, andererseits wird durch ihren Zusatz in der Regel die Aushärtung des Schaumstoffes verzögert. Durch die hohen Reserven, die die erfindungsgemäßen Polyolgemische bezüglich Aushärtung besitzen, lassen sich derartige Konzentrationen an aromatischen Ersten mitverwenden, ohne daß die Formverweilzeit der Schaumstoffe negativ beeinflußt wird.

Zur Herstellung der Additionsverbindungen können als Alkylenoxide beispielsweise Ethylenoxid (EO), Propylenoxid (PO), Butylenoxid, Dodecyloxid oder Styroloxid eingesetzt werden; bevorzugt wird Propylenoxid verwendet.

Als Starterverbindungen für die Herstellung der Additionsverbindungen werden aromatische Di- oder Polyamine eingesetzt, die primäre oder sekundäre Aminogruppen aufweisen, z.B. Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), Diaminodiphenylmethane (2,2'-Diaminodiphenylmethan, 2,4'-Diaminodiphenylmethan, 4,4'-Diaminodiphenylmethan oder Gemische dieser Isomeren) und deren höhere Homologe oder Naphthalindiamine wie 1,8-Naphthalindiamin. Bevorzugt sind o-Toluylendiamin (Gemisch aus 2,3-Toluylendiamin und 3,4-Toluylendiamin), Diphenylmethandiamin oder dessen höhere Homologe und 1,8-Naphthalindiamin.

Zur Herstellung der erfindungsgemäßen Polyolgemische kann man das niedrigviskose Polyol im Reaktionsgefäß vorlegen, das Amin zugeben und dann mit Alkylenoxid umsetzen. Man kann auch das niedrigviskose Polyol direkt nach der Reaktion im Gefäß zusetzen, oder man führt die Additionsverbindung in noch warmen Zustand mit dem eine OH-Zahl im Bereich von 250 bis 500 aufweisenden Polyol über eine Mischstation beim Abfüllvorgang zusammen.

Gegenstand der Erfindung sind auch Polyurethan-Hartschäume, erhältlich durch Umsetzung eines erfindungsgemäßen Polyolgemischs mit Di- und/oder Polyisocyanaten, Treibmitteln sowie gegebenenfalls Schaumstabilisatoren, Aktivatoren und anderen Schaumzusatzmitteln.

Als Di- oder Polyisocyanate kommen aliphatische, cycloaliphatische, araliphatische, aromatische und heterocyclische Polyisocyanate in Frage, wie sie in Justus Liebigs Annalen der Chemie 562 (1949) 75 beschrieben werden, beispielsweise solche der Formel

Q(NCO)ₙ

in der
- n: eine ganze Zahl von 2 bis 4, vorzugsweise 2, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen, oder einen araliphatischen Kohlenwasserstoffrest mit 8 bis 15, vorzugsweise 8 bis 13 C-Atomen bedeuten.

Bevorzugt sind Polyisocyanate, wie sie in der DE-OS 2 832 253 beschrieben werden. Besonders bevorzugt eingesetzt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Beispiele für erfindungsgemäß einsetzbare Treibmittel sind Wasser, Alkane wie n-Pentan, iso-Pentan, Gemische aus n- und iso-Pentan, Cyclopentan, Cyclohexan, Mischungen aus Butanisomeren und den genannten Alkanen, Dialkylether wie Dimethylether oder Methylbutylether, Cycloalkylenether wie Furan, teilhalogenierte Fluorchlorkohlenwasserstoffe wie 1,1,1-Dichlorfluorethan (R 141b), teilfluorierte Kohlenwasserstoffe wie Tetrafluorethan (R 134 oder R 134a), 1,1,1,3,3,3-Hexafluorpropan (R 356) oder 1,1,1,3,3-Pentafluorpropan (R 245fa) und Schwefelhexafluorid. Weitere Beispiele für Treibmittel sowie Einzelheiten über die Verwendung, von Treibmitteln sind in Vieweg und Höchtlen (Hrsg.): Kunststoff-Handbuch, Band VII, Carl-Hanser-Verlag, München 1966, S. 108f, S. 453ff und S. 507ff beschrieben.

Als Schaumstabilisatoren kommen vor allem Polyethersiloxane, speziell wasserlösliche Vertreter, zum Einsatz. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in US-A 2 834 748, US-A 2 917 480 und US-A 3 629 308 beschrieben. Von besonderem Interesse sind vielfach über Allophanatgruppen verzweigte Polysiloxan-Polyoxyalkylen-Copolymere gemäß DE-A 25 58 523.

Beispiele für geeignete Katalysatoren sind organische Zinnverbindungen, wie Zinn(II)salze organischer Carbonsäuren, z.B. Zinn(II)acetat), Zinn(II)octoat, Zinn(II)ethylhexoat und Zinn(II)laurat und die Dialkylzinn(IV)salze z.B. Dibutylzinndiacetat, Dibutylzinndilaurat, Dibutylzinnmaleat und Dioctylzinndiacetat. Weitere Beispiele für geeignete Katalysatoren Triethylendiamin, N,N-Dimethylcyclohexylamin, Tetramethylendiamin, 1-Methyl-4-dimethylaminoethylpiperazin, Triethylamin, Tributylamin, Dimethylbenzylamin, N,N',N"-Tris-(dimethylaminopropyl)hexahydrotriazin, Dimethylaminopropylformamid, N,N,N',N'-Tetramethylethylendiamin, N,N,N',N'-Tetrametylbutandiamin, Tetrametylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, N-Methylmorpholin, N-Ethylmorpholin, N-Cyclohexylmorpholin, 2,3-Dimethyl-3,4,5,6,-tetrahydropyrimidin, Triethanolamin, Diethanolamin, Triisopropanolamin, N-Methyldiethanolamin, N-Ethyldiethanolamin, Dimethylethanolamin, Tris-(N,N-dimethylaminopropyl)-s-hexahydrotriazin, Tetramethylammoniumhydroxid, Kaliumacetat, Natriumacetat, Natriumhydroxid oder Gemische dieser oder ähnlicher Katalysatoren.

Weitere Beispiele von gegebenenfalls mitzuverwendenden oberflächenaktiven Zusatzstoffen und Schaumstabilisatoren sowie Zellreglern, Reaktionsverzögerem, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind in Vieweg und Höchtlen (Hrsg.): Kunststoff-Handbuch, Band VII, Carl-Hanser-Verlag, München 1966, S. 103 - 113 beschrieben.

Zur Herstellung von Polyurethan-Hartschäumen werden die Reaktionskomponenten nach dem an sich bekannten Einstufenverfahren, dem Prepolymerverfahren oder dem Semiprepolymerverfahren zur Umsetzung gebracht, wobei man sich vorzugsweise maschineller Einrichtungen bedient wie sie in US-PS 2 764 565 beschrieben werden. Einzelheiten über Verarbeitungseinrichtungen, die hierfür eingesetzt werden können, werden in Vieweg und Höchtlen (Hrsg.): Kunststoff-Handbuch, Band VII, Carl-Hanser-Verlag, München 1966, S. 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz in Frage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, dass das Formteil eine kompakte Haut und einen zelligen Kern aufweist. Erfindungsgemäß kann man in diesem Zusammenhang so vorgehen, dass man in die Form so viel schaumfähiges Reaktionsgemisch einträgt, daß der gebildete Schaumstoff die Form gerade ausfüllt. Man kann aber auch so arbeiten, dass man mehr schaumfähiges Reaktionsgemisch in die Form einträgt, als zur Ausfüllung des Forminneren mit Schaumstoff notwendig ist. Im letztgenannten Fall wird somit unter sog. "overcharging" gearbeitet; eine derartige Verfahrensweise ist z. B. aus US-PS 3 178 490 und US-PS 3 182 104 bekannt.

Bei der Formverschäumung werden vielfach an sich bekannte "äußere Trennmittel" wie Siliconöle mitverwendet. Man kann aber auch sogenannte "innere Trennmittel", verwenden, gegebenenfalls im Gemisch mit äußeren Trennmitteln, wie dies beispielsweise aus DE-OS 21 21 670 und DE-OS 23 07 589 hervorgeht.

Selbstverständlich können aber auch Schaumstoffe durch Blockverschäumung oder nach dem an sich bekannten Doppeltransportbandverfahren (s. "Kunststoffhandbuch", Band VII, Carl Hanser Verlag, München Wien, 3. Auflage 1993, S. 148) hergestellt werden.

Gegenstand der Erfindung ist auch die Verwendung der erfindungsgemäßen Hartschäume zur Wärmedämmung. Die erfindungsgemäßen Schaumstoffe können mit Vorteil bei allen Anwendungen der Wärmedämmung eingesetzt werden. Erfindungsgemäß bevorzugt ist der Einsatz als Dämmstoff in Kältegeräten, da hier die Kombination guter Wärmedämmung, hoher Festigkeit, guter Pentanlöslichkeit (Treibmittel) und schneller Aushärtung (kurze Formverweilzeit) besonders zum Tragen kommt. Die erfindungsgemäßen Hartschaumstoffe können beispielsweise als Zwischenschicht in Verbundelementen oder zum Ausschäumen von Hohlräumen von Kühl- und Gefriergeräten verwendet werden. Sie finden aber auch Anwendung im Bauwesen oder zur Wärmedämmung von Fernwärmerohren und Containern.

### Beispiele

### Polyol A

In einem für Umsetzungen mit Alkylenoxiden geeignetem 100 1 Reaktor werden 9 kg eines Isomerengemisches aus 2,3- und 3,4-Toluylendiamin vorgelegt und nach gründlichem Spülen mit Stickstoff bei 110 bis 125° C und 2 bis 3 bar Stickstoff inerhalb von 2 Stunden 15 kg Propylenoxid (3,5 Mol/Mol Toluylendiamin) zudosiert. Nach 2 Stunden Nachreaktion wird das Reaktionsgemisch abgekühlt. Man erhält 24 kg eines Polyethers der OH-Zahl 605.

### Polyol B

Ein durch anionische Polyaddition von 1,2-Propylenoxid an eine Mischung von Sucrose, Ethylenglykol und Wasser erhaltener Polyether mit einem zahlenmittleren Molekulargewicht von 550 g/mol und einer OH-Zahl von 440.

### Polyol C

Ein durch anionische Polyaddition von 1,2-Propylenoxid an eine Mischung von Sucrose, Ethylenglykol und Wasser erhaltener Polyether mit einem zahlenmittleren Molekulargewicht von 350 g/mol und einer OH-Zahl von 380.

### Polyol D

Polyesterpolyol mit einem zahlenmittleren Molekulargewicht von 380 g/mol und einer OH-Zahl von 300, erhalten durch Polykondensation von Phthalsäurenanhydrid mit Diethylenglykol.

### Schaumherstellung

Aus den Polyethern A, B, C, D wird eine Mischung im Gewichtsverhältnis 30:40:20:10 hergestellt. Diese Mischung wird gemäß Tabelle 1 auf einer Hochdruckmaschine HK 270 der Fa. Hennecke bei 20°C zu Polyurethan-Hartschaumstoff verarbeitet. Die an diesem Schaum gemessenen mechanischen Parameter sind in Tabelle 2 zusammengefaßt.

**Tab. 1**

| | |
|---|---|
| Polyolmischung [Gew.-Tle] | 100 |
| Silikonstabilisator [Gew.-Tle] | 2 |
| Katalysator 1 [Gew.-Tle] | 1 |
| Katalysator 2 [Gew.-Tle] | 0.5 |
| Wasser [Gew.-Tle] | 2 |
| Cyclopentan [Gew.-Tle] | 17 |
| Isocyanat [Gew.-Tle] | 156 |

- Katalysator 1:: Dimethycyclohexylamin
- Katalysator 2:: Pentamethyldiethylentriamin
- Silikonstabilisator:: handelsüblicher Silikonstabilisator (Tegostab^{®} B 8443, Th. Goldschmidt AG, D- Essen)
- Isocyanat:: polymeres MDI (Desmodur^{®} 44V20, Bayer AG, D-51368 Leverkusen)

**Tab. 2**

| | |
|---|---|
| Freie Rohdichte [kg/m³] | 21,4 |
| Kernrohdichte [kg/m³] | 32,0 |
| Wärmeleitzahl nach DIN 52616-77 (mW/m·K) | 19,8 |
| Druckfestigkeit nach DIN 52421-84 (MPa) | 0,14 |
| Formstabilität nach DIN 53431-77 (3h, -30°C); Dimensionsänderung in % | 0 |

## Patentansprüche

1. Polyolgemisch, das
a) 5 bis 60 Gew.-% eines oder mehrerer Additionsprodukt(e) von Alkylenoxid an aromatisches Di- oder Polyamin, wobei im Additionsprodukt das molare Verhältnis von Alkylenoxid zu an Stickstoff gebundenen Wasserstoffatomen im aromatischen Di- oder Polyamin maximal 1:1 beträgt, und
b) 40 bis 95 Gew.-% Polyether- und/oder Polyesterpolyole mit OH-Zahlen von 250 bis 500 enthält.

2. Polyolgemisch gemäß Anspruch 1, das bezogen auf die Gesamtmenge an Additionsprodukt(en) von Alkylenoxid an aromatisches Di- oder Polyamin 30 bis 70 Gew.-% eines Polyols mit einer Viskosität kleiner 3000 mPas (25°C) enthält.

3. Polyolgemisch gemäß einem der Ansprüche 1 bis 2, bei dem das Alkylenoxid Propylenoxid ist.

4. Polyolgemisch gemäß einem der Ansprüche 1 bis 3, bei dem als aromatisches Diamin o-Toluylendiamin eingesetzt wird.

5. Polyolgemisch gemäß einem der Ansprüche 1 bis 3, bei dem als aromatisches Di- oder Polyamin Diphenylmethandiamin oder dessen höhere Homologe eingesetzt werden.

6. Polyolgemisch gemäß einem der Ansprüche 1 bis 3, bei dem als aromatisches Diamin 1,8-Naphthalindiamin eingesetzt wird.

7. Polyurethan-Hartschaum, erhältlich durch Umsetzung eines Polyolgemischs gemäß einem der Ansprüche 1 bis 6 mit Di- und/oder Polyisocyanaten, Treibmitteln sowie gegebenenfalls Schaumstabilisatoren, Aktivatoren und anderen Schaumzusatzmitteln.

8. Verwendung des Hartschaums gemäß Anspruch 7 zur Wärmedämmung.

## Claims

1. Polyol mixture which comprises
a) 5 to 60 wt.% of one or more addition product(s) of alkylene oxide on aromatic di- or polyamine, the molar ratio in the addition product of alkylene oxide to hydrogen atoms bonded to nitrogen in the aromatic di- or polyamine being not more than 1:1, and
b) 40 to 95 wt.% of polyether- and/or polyester-polyols with OH numbers of 250 to 500.

2. Polyol mixture according to claim 1, which comprises 30 to 70 wt.% of a polyol with a viscosity of less than 3,000 mPas (25°C), based on the total amount of addition product(s) of alkylene oxide on aromatic di- or polyamine.

3. Polyol mixture according to one of claims 1 to 2, in which the alkylene oxide is propylene oxide.

4. Polyol mixture according to one of claims 1 to 3, in which o-toluylenediamine is employed as the aromatic diamine.

5. Polyol mixture according to one of claims 1 to 3, in which diphenylmethanediamine or higher homologues thereof is employed as the aromatic di- or polyamine.

6. Polyol mixture according to one of claims 1 to 3, in which 1,8-naphthalenediamine is employed as the aromatic diamine.

7. Rigid polyurethane foam obtainable by reaction of a polyol mixture according to one of claims 1 to 6 with di- and/or polyisocyanates, blowing agents and optionally foam stabilizers, activators and other foam additives.

8. Use of the rigid foam according to claim 7 for thermal insulation.

## Revendications

1. Mélange de polyols contenant
a) de 5 à 60% en poids d'un ou plusieurs produits d'addition d'oxyde d'alkylène à une diamine ou polyamine aromatique, le ratio molaire de l'oxyde d'alkylène sur les atomes d'hydrogène liés à un azote dans la diamine ou polyamine aromatique étant au maximum égal à 1:1 dans le produit d'addition, et
b) de 40 à 95% en poids de polyols de polyéther et/ou de polyester ayant des indices d'OH dans la plage de 250 à 500.

2. Mélange de polyols selon la revendication 1, contenant, ramené à la quantité totale de produits d'addition d'oxyde d'alkylène à une diamine ou polyamine aromatique, de 30 à 70% en poids d'un polyol dont la viscosité est inférieure à 3000 mPas (à 25°C).

3. Mélange de polyols selon l'une des revendications 1 à 2, dans lequel l'oxyde d'alkylène est l'oxyde de propylène.

4. Mélange de polyols selon l'une des revendications 1 à 3, dans lequel la diamine aromatique utilisée est la *o*-toluylène diamine.

5. Mélange de polyols selon l'une des revendications 1 à 3, dans lequel la diamine ou polyamine aromatique utilisée est la diphénylméthane diamine ou un homologue supérieur de celle-ci.

6. Mélange de polyols selon l'une des revendications 1 à 3, dans lequel la diamine aromatique utilisée est la 1,8-naphtalène diamine.

7. Mousse dure en polyuréthane, qui peut être obtenue en faisant réagir un mélange de polyols selon l'une des revendications 1 à 6 avec des diisocyanates et/ou des polyisocyanates, des agents porogènes ainsi le cas échéant que des stabilisateurs de mousse, des activateurs et d'autres additifs pour mousses.

8. Utilisation de la mousse dure selon la revendication 7 pour l'isolation thermique.
